# DEMANDE DE BREVET EUROPEEN

(11) **EP 3 315 318 A1**
(43) Date de publication de la demande: **02.05.2018**
(21) Numéro de dépôt: 17315007.9
(22) Date de dépôt: 09.10.2017
(51) Int. Cl.: B60B 33/00

(54) **ROULETTE**

(30) Priorité: 27.10.2016 FR 1670638
(71) Demandeur: TENTE ROULETTES POLYMERES-BRUANDET, 39700 La Barre (FR)
(72) Inventeur: Dayt, Patrick, 25000 Besancon (FR)
(74) Mandataire: Flavenot, Bernard

(57) **Abrégé**

La présente invention concerne les roulettes pour aider au déplacement d'un meuble sur un sol.

La roulette selon l'invention se caractérise essentiellement par le fait qu'elle comporte un carter 10 comportant un fût 11 défini selon un premier axe 12, au moins une roue 15, des moyens pour monter la roue en rotation par rapport au carter 10 autour d'un second axe 16 sensiblement perpendiculaire au premier axe 12, un puits 20 cylindrique de révolution réalisé dans le fût 11 selon l'axe 12 et débouchant sur la surface latérale du carter par une ouverture 21, un pivot 30 d'une section transversale sensiblement égale à celle du puits 20 de façon qu'il soit apte à pivoter dans le puits, le pivot étant en outre configuré pour qu'il comporte une partie 31 qui émerge du puits par l'ouverture 21, et des moyens de conduit 40 dont une extrémité 41 entoure de façon étanche une portion 32 de la partie émergente 31 du pivot contigüe à l'ouverture 21 et le bord de l'ouverture 21 d'où émerge le pivot 30, et dont l'autre extrémité 42 est éloignée de l'extrémité 41.

## Description

La présente invention concerne les roulettes pour aider au déplacement d'un meuble sur un sol.

Par meuble, au sens de la présente description, il est compris tout meuble de quelque nature qu'il soit, susceptible d'être déplacé sur une surface quelconque, un sol ou analogue. A titre d'exemple illustratif mais nullement limitatif, un tel meuble peut être une table, un lit, une valise, une chaise, un fauteuil, etc.

On connaît déjà des roulettes pour aider au déplacement de tels meubles.

Une telle roulette est généralement constituée d'un carter comportant un fût défini selon un premier axe, au moins une roue, des moyens pour monter la roue en rotation par rapport au carter autour d'un second axe sensiblement perpendiculaire au premier axe, un puits de forme sensiblement cylindrique de révolution réalisé dans le fût selon le premier axe et débouchant sur la surface latérale du carter par une ouverture, et un pivot de forme cylindrique de révolution d'une section transversale sensiblement égale à celle du puits de façon que ce pivot soit apte à pénétrer et à pivoter dans le puits, le pivot étant en outre configuré pour qu'il comporte une partie qui émerge du puits par l'ouverture pour pouvoir fixer le pivot au meuble à déplacer.

Pour des raisons industrielles, le pivot est généralement en métal tandis que le fût est en matière plastique et, pour que le pivot puisse facilement pivoter dans le fût, malgré la différence de matière comme définie ci-dessus, il est souvent fait appel à un lubrifiant relativement pâteux.

Des roulettes selon l'art antérieur sont par exemple définies dans les US 2016068180 et US 2013111700.

Or, lorsqu'une telle roulette est utilisée dans des atmosphères contenant des poussières ou analogues, ces poussières passent entre le fût et le pivot et, en s'agglomérant au lubrifiant, constituent un abrasif qui détruit très rapidement le bon roulage de la roulette qui de ce fait ne joue plus correctement son rôle de faciliter le déplacement du meuble.

Aussi, la présente invention a-t-elle pour but de réaliser une roulette d'une réalisation très simple et peu onéreuse qui pallie en grande partie l'inconvénient des roulettes connues rapporté ci-dessus.

Plus précisément, la présente invention a pour objet une roulette telle définie dans la revendication 1 annexée et éventuellement dans les revendications dépendantes.

D'autres caractéristiques et avantages de la présente invention apparaîtront au cours de la description suivante donnée à titre d'exemple illustratif mais nullement limitatif, dans laquelle :
La figure 1 représente une vue en perspective cavalière d'un mode de réalisation d'une roulette selon l'invention,
La figure 2 représente une vue en coupe partielle de l'élément essentiel de la roulette selon l'invention illustrée dans son ensemble en perspective cavalière, associée à une représentation en effet de loupe sur une partie encadrée référencée "C" qui concerne plus particulièrement la caractéristique essentielle de l'invention, et
La figure 3 représente une vue en coupe partielle de l'élément essentiel de la roulette selon l'invention, dans un mode de réalisation industriel préféré.

Il est tout d'abord précisé que, dans la présente description, si l'adverbe « sensiblement » est associé à un qualificatif donné, ce qualificatif doit être compris au sens strict ou approché.

En référence aux figures annexées qui illustrent un mode de réalisation préféré de la roulette selon l'invention pour aider au déplacement d'un meuble par roulage sur un sol, la roulette comporte un carter 10 comportant un fût 11 défini selon un premier axe 12, au moins une roue 15, de préférence deux montées en parallèle, et des moyens pour monter la roue en rotation par rapport au carter 10 autour d'un second axe 16 sensiblement perpendiculaire au premier axe 12.

Un puits 20 de forme sensiblement cylindrique de révolution est réalisé dans le fût 11 selon le premier axe 12, en débouchant sur la surface latérale du carter par une ouverture 21.

Il est en outre prévu un pivot 30 de forme cylindrique de révolution d'une section transversale sensiblement égale à celle du puits 20 de façon qu'il soit apte à pénétrer et à pivoter dans le puits. En outre, le pivot est configuré, notamment en longueur selon l'axe 12, de façon à comporter une partie 31 qui émerge du puits par l'ouverture 21.

Une telle ouverture 21 est généralement biseautée ou chanfreinée, pour que le pivot 30 ne pénètre pas dans le puits 20 par une ouverture à angle vif. Ce chanfrein a été représenté sur les figures, relativement exagéré, et il est donc précisé que l'ouverture 21 au sens de la présente description est essentiellement définie par la grande base du chanfrein.

Selon une caractéristique essentielle de l'invention, la roulette décrite ci-dessus comporte en outre des moyens de conduit 40, qui définissent un conduit qui se présente sous la forme d'un anneau à section transversale en double-U, dont la première extrémité 41 est constituée par le centre de l'anneau et la seconde extrémité 42 est constituée par la périphérie de cet anneau.

Par "moyens de conduit 40" au sens de la présente invention, il est compris des moyens pour délimiter ou réaliser ou former un conduit creux 40 qui peut être rempli de l'atmosphère gazeuse du milieu ambiant comme l'air au niveau du globe terrestre, dans laquelle se déplace ou peut se déplacer la roulette selon l'invention.

Ces moyens de conduit 40 sont agencés de façon que la première 41 de leurs deux extrémités entoure de façon étanche à la fois une portion 32 de la partie émergente 31 du pivot, cette portion étant contiguë à l'ouverture 21, et le bord de l'ouverture 21 d'où émerge le pivot 30.

La seconde extrémité 42 de ces moyens de conduit 40 est située dans une position éloignée de la première extrémité 41.

Une roulette selon l'invention est destinée à rouler sur un sol dans un milieu où règne une force de gravitation. En conséquence, les poussières soulevées par quelque force que ce soit lors du roulement de la roulette sur le sol, d'une part ont des difficultés à contrer la force de gravitation, et d'autre part ont une tendance naturelle à retomber vers le sol.

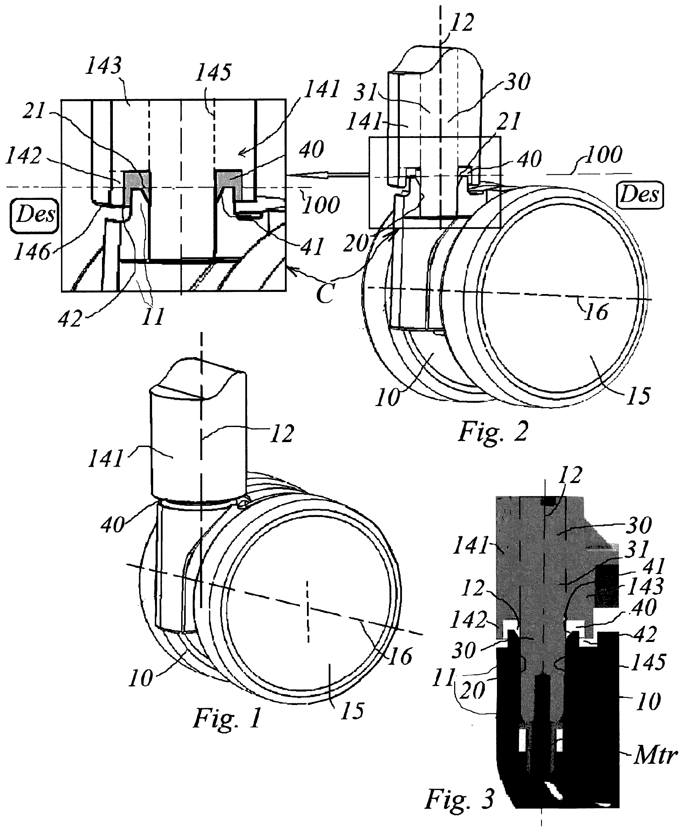

Pour gêner la pénétration des poussières et autres particules indésirables dans le conduit 40 (en grisé sur la partie gauche à effet de loupe de la figure 2) et les empêcher d'atteindre l'ouverture 21, afin d'éviter les inconvénients évoqués au préambule, selon un mode de réalisation préférentiel et très avantageux, la seconde extrémité 42 du conduit 40 est située dans le demi-espace Des délimité par le plan 100 passant par l'ouverture 21 et contenant le fût 11, de façon que cette seconde extrémité 42, et donc l'entrée du conduit 40, soit à un niveau inférieur à celui où se situe sensiblement l'ouverture 21 quand la roulette roule sur un sol, c'est-à-dire soit située en dessous de cette ouverture 21.

Pour une réalisation industrielle, notamment dans l'objectif d'un montage rapide et possiblement automatique, les moyens de conduit 40 comportent un écran de protection 141.

Cet écran de protection 141 est constitué, figures 2 et 3, d'une bague cylindrique 142 dont le diamètre intérieur est au moins égal au diamètre extérieur du fût 11 au moins au niveau de l'ouverture 21, et d'un fond 143 obturant la bague 142 à une première 144 de ses extrémités, le fond comportant un orifice 145 d'un diamètre au moins égal au diamètre du pivot 30.

La roulette comporte alors en outre des moyens pour solidariser l'écran de protection 141 avec le pivot 30 de façon que ce dernier passe de façon étanche dans l'orifice 145 et que la seconde extrémité 146 de la bague opposée à la première 144 soit située dans le demi-espace Des, défini ci-avant, délimité par le plan passant par l'ouverture 21 et contenant le fût 11.

Toujours dans les buts définis ci-dessus, pour obtenir une rotation du pivot 30 dans le puits 20 sans entraves particulières, notamment pour éviter des frottements parasites, il est très préférable que, comme illustré, le diamètre intérieur de la bague 142 soit supérieur au diamètre extérieur du fût 11.

De préférence, le pivot 30 et l'écran de protection 141 sont réalisés d'une seule pièce.

Dans de nombreuses applications, notamment quand le pivot est monté pivotant dans le carter 10, le pivot 30 est réalisé en métal, optionnellement en aluminium, et le fût 11 est réalisé en une matière plastique moulée.

Il est alors en outre préférable, et donc très avantageux, que la roulette comprenne, entre la paroi du puits 20 et le pivot 30, un lubrifiant, optionnellement de la graisse.

De plus, comme illustré sur la figure 3, la roulette comporte des moyens Mtr pour solidariser le pivot par rapport au fût 11 uniquement en translation, mais non pas en rotation, pour éviter que le pivot 30 ne se désolidarise du carter et ne soit pas empêché de pivoter par rapport à celui-ci. Ces moyens sont bien connus en eux-mêmes et ne seront pas plus amplement décrits ici dans le seul souci de simplifier la présente description. Leur seule représentation, même partielle comme sur cette figure 3, sera suffisante à l'homme du métier pour les mettre en oeuvre.

La roulette selon l'invention présente une structure très simple et peut être assemblée sans difficultés particulières. Mais, du fait de cette structure selon laquelle elle comporte notamment les moyens de conduit 40 comme illustré sur les figures 2 et 3, lorsqu'elle roule sur un sol par exemple très poussiéreux, les poussières auront beaucoup de mal à arriver jusqu'à l'ouverture 21, et l'apparition des inconvénients des roulettes antérieures mentionnés au préambule sera repoussée à plus longue échéance, contribuant ainsi à conférer à la roulette selon l'invention une durée de vie plus longue que celle des roulettes du même type de l'art antérieur.

## Revendications

1. Roulette pour aider au déplacement d'un meuble par roulage sur un sol, la roulette comportant :
• un carter (10), ledit carter comportant un fût (11) selon un premier axe (12),
• au moins une roue (15),
• des moyens pour monter ladite roue en rotation par rapport au dit carter (10) autour d'un second axe (16) sensiblement perpendiculaire au premier axe (12),
• un puits (20) de forme sensiblement cylindrique de révolution réalisé dans ledit fût (11) selon ledit premier axe, ledit puits débouchant sur la surface latérale du dit carter par une ouverture (21),
• un pivot (30) de forme cylindrique de révolution d'une section transversale sensiblement égale à celle du puits (20) de façon que ledit pivot soit apte à pénétrer et à pivoter dans ledit puits, ledit pivot étant en outre configuré pour qu'il comporte une partie (31) qui émerge du puits par ladite ouverture (21), et
• des moyens de conduit (40) dont une première extrémité (41) entoure de façon étanche une portion (32) de la partie émergente du pivot (31), ladite portion (32) étant contigüe à ladite ouverture (21), et le bord de ladite ouverture (21) d'où émerge ledit pivot (30), et dont la seconde extrémité (42) est éloignée de la première extrémité (41),
**caractérisée par le fait que** la seconde extrémité (42) des moyens de conduit est située dans le demi-espace (Des) délimité par le plan (100) passant par ladite ouverture (21) et contenant ledit fût (11).

2. Roulette selon la revendication 1, **caractérisée par le fait que** les moyens de conduit (40) comportent au moins :
• un écran de protection (141), ledit écran étant constitué d'une bague cylindrique (142) dont le diamètre intérieur est au moins égal au diamètre extérieur du fût (11) et d'un fond (143) obturant ladite bague (142) à une première (144) de ses extrémités, ledit fond comportant un orifice (145) d'un diamètre au moins égal au diamètre du pivot (30),
• la roulette comportant en outre des moyens pour solidariser ledit écran (141) avec ledit pivot (30) de façon que ce dernier passe de façon étanche par ledit orifice (145) et que la seconde extrémité (146) de ladite bague opposée à la première (144) soit située dans ledit demi-espace (Des) délimité par le plan passant par ladite ouverture et comportant le fût.

3. Roulette selon la revendication 2, **caractérisée par le fait que** le diamètre intérieur de ladite bague (142) est supérieur au diamètre extérieur du fût (11).

4. Roulette selon l'une des revendications 2 et 3, **caractérisée par le fait que** le pivot (30) et l'écran de protection (141) sont réalisés d'une seule pièce.

5. Roulette selon la revendication 4, **caractérisée par le fait que** ledit pivot (30) est réalisé en métal, optionnellement en aluminium, et le fût (11) en une matière plastique moulée.

6. Roulette selon la revendication 5, **caractérisée par le fait qu'**elle comprend, entre la paroi du puits (20) et ledit pivot (30), un lubrifiant, optionnellement de la graisse.

7. Roulette selon l'une des revendications précédentes, **caractérisée par le fait qu'**elle comprend des moyens (Mtr) pour solidariser le pivot (30) par rapport au fût (11) uniquement en translation et non pas en rotation.
